# EUROPEAN PATENT SPECIFICATION

(11) **EP 2 778 923 B1**
(45) Date of publication and mention of the grant of the patent: **04.05.2022**
(21) Application number: 14158754.3
(22) Date of filing: 11.03.2014
(51) Int. Cl.: H04W 80/00, H04W 88/16, H04L 29/06, H04W 4/00

(54) **Method and apparatus for selecting an application of a device having an nfc interface**
Verfahren und Vorrichtung zur Auswahl einer Anwendung einer Vorrichtung mit einer NFC-Schnittstelle
Procédé et appareil pour sélectionner une application d'un dispositif présentant une interface NFC

(30) Priority: 11.03.2013 US 201361775737 P
(43) Date of publication of application: 17.09.2014
(73) Proprietor: Nagravision Sàrl, 1033 Cheseaux-sur-Lausanne (CH)
(72) Inventor: Sarda, Pierre, 1040 Echallens (CH); Thomas, M. Frédéric, 1213 Onex (CH)
(74) Representative: Vigand, Philippe

(56) References cited:
- WO-A1-2007/112787
- WO-A1-2012/065643
- US-A1- 2012 220 282

## Description

### Introduction

Near Field Communication ("NFC") technology is a high frequency wireless communication technology, with a range of the order of a few centimeters, for the exchange of information between multiple devices. This technology is originating from a combination in a single device, of a smart card interface and a contactless reader.

An NFC device is able to communicate with other NFC devices as well as devices in conformance with the ISO 14443 (contactless smart card) standard.

The standards covering the NFC communication protocols and data exchange formats and are based on existing standards for radio frequency identification (RFID), such as ISO/IEC 14443, FeliCa and ISO/IEC 18092. Other NFC standards include standards defined by the "NFC Forum," which was founded in 2004 by Nokia, Philips and Sony and now includes more than 180 members.

NFC is an extension of RFID technology, allowing two-way communication between two devices while previous systems such as contactless smart cards allow only one-way communication.

NFC technology is usable only over a short distance of a few centimeters, which implies a voluntary user and usually prevents use without his knowledge.

NFC devices can be active or passive. A passive device, such as a tag , a smart card or a simple chip affixed to an object contains information only readable by other NFC-enabled devices. The passive device is powered by the electromagnetic field generated by the reader (active device) and therefore does not need its own power supply.

An active device is one that generates an electromagnetic field. The active device can do that to interact with a passive device (see above) or to establish a communication channel with another active device.

The fact that a device like a smartphone has a power supply does not necessarily mean it will work in active mode only. A smartphone can handle the NFC interface in active or passive mode. In passive mode, it is called card emulation. In this mode a smartphone (or any other portable device such as a tablet) will store in a secure memory information normally stored in the card. Thus, when the smartphone detects the electromagnetic field, it can access the secure memory and answer in passive mode NFC mode with the information read from the secure memory.

Among the many known applications using NFC technology are the following:
- payment using a credit card or contactless (mobile phone , smartphone, laptop, tablet computer ... ) mobile device on a contactless payment terminal;
- payment of parking terminal accepting contactless payment using NFC mobile terminal ;
- purchase and validation of a contactless ticket or a ticket to a show with her mobile;
- management of coupons in a store, manage loyalty points at retailers (couponing ) ;
- access and starting a vehicle using his mobile phone ;
- Read product information (price, composition , allergy, etc. . ) in a store ;
- Control access to local OA ( meeting room, business , classroom, etc.);
- exchange profiles between two users of a social network or game levels by bringing the two phones (user peer- to-peer) ;
- reading an electronic business card with a PDA ;
- sync Internet bookmarks and contacts between a PDA and a mobile phone ;
- recovery key to a WiFi access point approaching its " NFC device" terminal dissemination ;
- access to home automation features of a building.

### Background Art

The generalization of the NFC technology on devices such smartphones, tablets, computers or set-top-boxes opens a high number of applications on these devices, and it is often the case that the same device comprises several applications using the NFC interface. As a consequence, the hardware layer of the device in charge of the communication via the NFC reader must determine to which application, among the plurality of applications loaded into the device, the data acquired through the NFC interface should be communicated.

Document US 2012/220282 A1 relates to a method, a system and a mobile device to search and acquire a desired application by using Near Field Communication. To this end, this document suggests to read a keyword from a NFC tag in response to a tagging event, then to perform an application search using the keyword, and finally to download a specific application found using the keyword.

Document WO 2012/065643 A1 relates to a method for identifying an NFC application on an NFC enabled device comprising a plurality of NFC execution environments. Each NFC execution environment may host several different applications. The method disclosed in this document comprises an operation of receiving an external request for accessing an application over the air interface of the NFC enabled device. The external request may be issued by the remote reader and/or remote writer. In particular, the request for accessing the application may correspond to an IS07816-4 SELECT (AID) message, the AID (Application ID) being an identifier of the application.

### Brief description of the invention

The present invention describes a method to select an application on a first device having an NFC interface and comprising a plurality of applications using the NFC interface according to claim 1, a router module according to claim 6 and a device according to claim 8.

The present invention is based on two important aspects, the first one being the selection of the particular application intended to establish a communication with the external NFC device (the second device) and the acknowledgement of the user to this communication.

### Brief description of the figure

The present invention will be better understood thanks to the attached figures in which:
Fig. 1 is diagram illustrating a communication between two devices.
Fig. 2 is a block diagram illustrating a communication device according to one embodiment.

### Detailed description

A main device such as a smart phone, a tablet, a computer or a set-top box can embody an NFC reader enabling interaction with secondary NFC devices. We call it a "main device" because it is on that device that the invention is implemented. The "secondary devices" are devices (active or passive) having an NFC interface and comprising data to interact with the main device. These secondary NFC devices can be passive (e.g., bank cards) or active (e.g., smart phones) as discussed above. These secondary NFC devices contain data of various types, such as payment data for an electronic wallet (passive device), identification data in a control access card (passive device), entrance ticket data in a data carrier (passive device), contact details in a smart phone (active device), audio or video content in a tablet (active device). In general, a passive device is related to one application (banking, ticketing, access control) and the data stored in it are associated with that application. However, even in a passive device, it is possible to have different sets of data associated with different applications. Since the passive device does not contain a power supply, the selection of the application is usually made by a button on the secondary device (for example press 1 to enable to first application, press 2 to enable the second application), or by a selection on the main device during an initialization process.

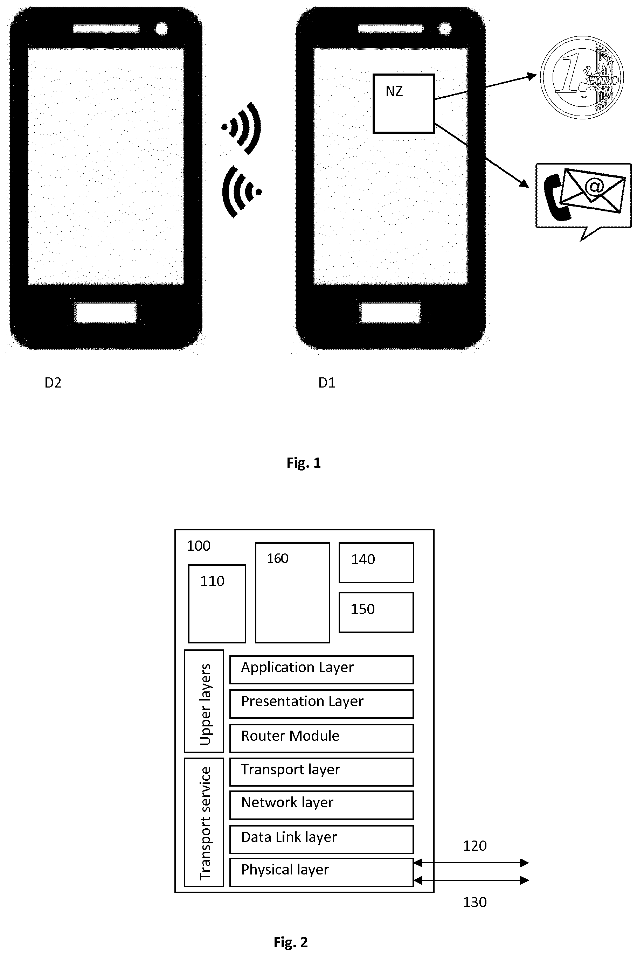

An example of a main device 100 is illustrated in the block diagram of Fig. 2 .The main device 100 comprises a processor (which may include one or more physical devices) 110 running an operating system which handles interaction with an NFC communication interface 120 and, optionally, one or more additional communication interfaces (e.g., transceivers) 130 (only a single additional interface 130 is illustrated in Fig. 1, but it should be understood that multiple additional interfaces are possible) such as Wifi, EDGE, 3G, 4G, USB, Bluetooth, Ethernet, etc.) and. The device 100 further includes an output device 140 (e.g., a display or indicator lights) suitable for prompting a user, and an input device 150 suitable for allowing a user to respond to prompts. The main device 100 further includes a memory 160 for storing one or more installed applications. The operating system includes a transport service layer that enables communication by the NFC communications interface 120 using the appropriate protocol. The detection and the response, at the data link layer is also the responsibility of the operating system. Once the message is received and acknowledged, this message is passed to the upper layers.

### General Protocol flow

The real value of NFC however comes not from its technical workings but from the protocols that have been built around it. By setting standards and building layers of abstraction on top of core NFC functionality, smartphone platform vendors can give developers a rich set of interfaces for interacting with the NFC ecosystem.

For example,the leading NFC industry organization, the NFC Forum, has been filling out the NFC family with protocols like NFC Data Exchange Format (NDEF) which allows the storage and communication of binary documents including MIME objects (images PDFs and so on) URLs and other details. NDEF record types specify whether the object is a Smart Poster Text URI Signature Generic Control or a handover control specification with Service Discovery Protocol IP OBEX and SNEP bindings allowing links to other types of objects.

NFC's rapid and ubiquitous communication has made it well-suited for public transportation systems where the ability to quickly read ticket information has made it a staple in countries like Singapore, Japan and the UK. In Europe, the transportation industry has already converged around the interoperable Calypso contactless ticket standard addressing the compatibility issues that plague NFC applications.

Point-of-sale transactions are also possible through NFC with card-based services like Mastercard PayPass eventually likely to allow NFC-equipped mobiles to act as virtual 'wallets' holding banking loyalty program personal preferences and other details. That's obviously a very high-security application, so banks will drive those rollouts at their own speed and using security they're happy with.

Early internal trials at the likes of Westpac and ANZ Bank have had a positive response while the leading mobile-communications industry organization the GSM Association (GSMA) is promoting adoption with its Mobile NFC specification Pay-Buy-Mobile global payments approach and the ISIS specification to provide a single global mechanism for NFC payments.

Now on multi-application devices, it is possible to run on the same device various different programs, each of which being willing to read or write data to an external NFC device. This is why a main device, comprising a plurality of NFC compatible applications, comprises an operating system that handles the physical layers of the NFC communication interface 120.

The next higher level of the NFC protocol stack defines different message formats. A popular format is the NFC Data Exchange Format (NDEF) defined by the NFC forum. The format defines a general message structure and comprises the application identification allowing devices to identify what kind of information is contained in the message it has received. The following list gives some examples of message types that can be encoded in an NDEF message:
- URI (web address, email address)
- Plain text
- Smart poster = text + uri
- Bluetooth and Wi-Fi parameters
- Business card (vCard format)
- Signature

Once an NDEF message has been received, a content dispatching system forwards the content of the message to an application that has registered itself for receiving these messages.

This way, different applications can register themselves for different message types and the dispatching system automatically forwards the message to the application that can handle the particular message type. When several applications register themselves for the same message type a dialogue box is usually presented to the user to choose which application should receive the message. When a web address has been received for example, it could be sent to the web browser while an NDEF message containing a vCard would trigger the address book application that has previously registered itself as a receiver for this kind of content.

Applications on a mobile device can not only receive NFC messages but also transmit them. The address book application for example can be extended to send NFC messages, e.g., to send an address book entry to the next NFC-enabled device that comes in range.

Embodiments of the present invention add or update the layer between the physical layers (i.e., the NFC communication interface 120) and the application layer by a router module that intercepts all messages received from the NFC interface. The function of the router module is twofold: the first function is to route the messages to the right application, and the second function is to prompt the user of such an operation. This router module comprises a table in which, for each message type, at least one application may be listed. When an application is installed on the main device, this table is updated with the application identifier and the type of messages handled by this application. As a consequence, for one message type, it is possible to have several application identifiers.

During the initialization process of the router module, the user can modify the prompt and select a particular icon per application.

| Type | S_ID | Application | Icon |
|---|---|---|---|
| URI | ID_m | App1 | Imag_1.gif |
| | ID_n | App2 | Imag_2.gif |
| vCard | ID_p | App3 | Imag_3.gif |
| Text | | App4 | Imag_4.gif |
| Signature | | | |

This table illustrates the configuration of the handling of the different message types. In addition to the message type, the physical layers of the NFC interface can obtain a service identification S_ID from the second device D2. This identification will help to define which application should be connected to the received messages. After the installation of an application, the router module is notified and informed about which message type is handled by this application. In case that an application App1 is using data of the URI type, the table will contain the App1 in the column of the possible application. The user can add a particular icon (Imag_1.gif), selected from the icon proposed by the application or from the images stored into the main device.

In this specific case, another application App2 is also using data type URI and is listed as well in the table. This application App2 is associated with another icon Imag_2.gif.

According to the invention, the link between the message type and the application is further limited to a service identification. In case that the message type is received and this table contains a service identification, the link between the NFC interface and the application is limited to the second device matching the service identification stored in the table. It is then possible, for the same message type to select different applications among the applications able to deal with this type of messages. The service identification of the second device identification can be a generic identification describing a particular service. For example, for the payment with NFC card, the main device can play the role of a banking card and be used for such transactions. The service identification of a point of sale (second device) can be the identification of the MasterCard service. So that all terminals will give the same identification and the same is stored into the table for connecting the entered message with the banking application stored into the main device. Another example is the QR code. The message type is "image" and the service identification is "QR Code". The router module, thanks to this information, can link the entered messages with the application storing the QR code.

In this table, we have three cases. In the first case (the first row), two (or more) application are willing to use the data of a certain type. The service ID is used to select the correct application. The second case (the second and third rows of the table) is a one to one matching, one application for one message type. The last case (the fourth row of the table) is the absence of application handling this message type.

Figure 1 illustrates the case when a second device D2 is in close contact with a first device D1 and the NFC communication is initiated. The physical layers of the first device D1 handle the NFC protocol and as a result, a message having a message type and a service identification is passed to the router module. The latter determines, based on the table, which application is associated with the message type.

The router module prompts the user in a notification zone NZ using the icon associated with the application selected. In a simple case, one icon is displayed and the router module holds the transfer of the message until the user has acknowledged the launch of the application. In the figure 1, a case is illustrated with the Euro sign meaning that a financial transaction is involved. The user has the option to grant the access to the application related to the financial transaction or deny it. Once granted, the message is passed to the selected application and the financial transaction can take place.

This is also a protection in that a message coming through an NFC interface is not automatically processed without the user's approval.

In the case that two (or more) applications are willing to use one message type and the service identification is empty in the table, the icon of the two applications will be displayed on the output device 140 (e.g., a smart phone display) and the user can choose one of them or deny any transaction via the input device 150 (which may be, for example, combined with the output device in the form of a touch screen). The service identification is then updated into the table so that future messages of this type of service are associated with this application.

In the case that no application is referenced with a particular message type (for example the signature message type in the above table), the main device can a request the user's action to link this message type and service identification with an already installed application. When a selection is made by the user, the table is updated and the next time that the same message type/service identification is received, the selected application will be proposed.

Alternatively, a request can be sent to a server proposing applications compatible with this message type. The request contains the message type and the server can list the applications compatible to the message type and send this list to the first device.

The router module, receiving this list, can check if one of the applications already installed is compatible with this message type. In the positive event, the router module prompts the user and requests the approval to associate and use the message received by the NFC interface with this application. In the negative event, the router module displays the list to propose to the user to download and install the application able to handle the message type not supported by the applications installed in the main device.

In case the user accepts one of the applications, the latter is downloaded into the main device and installed. Furthermore, the user is invited to add an icon to illustrate the application freshly installed. The table is updated accordingly.

## Claims

1. A method for selecting an application on a first device (D1, 100) having an NFC interface (120) and comprising a plurality of installed applications using the NFC interface (120), said method comprising the steps of:
detecting, via the NFC interface (120) of the first device (D1, 100), a second device (D2) having a second NFC interface;
obtaining from the second device, via the NFC interface (120) a message comprising a message type and a service identification;
intercepting, by a router module operating between the NFC communication interface (120) and an application layer of the first device (D1, 100), all messages received from the NFC interface (120), the messages being handled by a table that manages the message type and the service identification to determine which application is handled by which message type; in case the message type is already associated with a single application, selecting said single application, otherwise selecting the application among the plurality of installed applications matching the message type and the service identification, if such a matching exists in the table;
prompting a user of the first device (D1, 100) to accept a communication between the second device (D2) and the selected application; and
if the user accepts the communication, establishing the communication between the selected application and the second device (D2) via the NFC interface (120).

2. The method of claim 1, wherein if the table does not contain a service identification for the received message type while the message type is associated with more than one application in the table, the router module prompts the user with an icon representing each application matching said message type and updates the table by registering the application chosen by the user.

3. The method of claim 1 or 2, wherein, when an application is installed into the first device (D1, 100), the router module updates the table with the application and the message type handled by the application.

4. The method of any of the claims 1 to 3, wherein in case that no application matches the message type, the method further comprises the steps of:
sending by the first device (D1, 100), to a server, a request containing the message type;
determining by the server a list of applications matching the message type;
sending the list to the first device (D1, 100),
determining by the first device (D1, 100) if an installed application is listed in the list and,
if so, prompting the user to accept a communication between the second device (D2) and the installed application.

5. The method of claim 4, further comprising the step of, if none of the applications listed in the list is installed, proposing to the user to download and install one of the listed applications.

6. Router module located in a first device (D1, 100) having an NFC interface (120) and comprising a plurality of installed applications using the NFC interface (120), said router module being placed between the NFC communication interface (120) and an application layer, and being configured to intercept any message received from the NFC interface (120), said message comprising a message type and a service identification, said router module further comprising a table that manages the message type and the service identification to determine which application is handled by which message type;
said router module comprising means for:
in case the message type is already associated with a single application, selecting said single application, otherwise selecting the application among the plurality of installed applications matching the message type and the service identification if such a matching exists in the table,
prompting a user of the first device (D1, 100) to accept a communication between a second device (D2) having a second NFC interface and the selected application, and
in case of positive answer, establishing the communication between the selected application and the second device (D2) via the NFC interface (120).

7. Router module of the claim 6, further comprising means to:
prompt the user with an icon representing each application in case the table contains, for one message type, more than one application, and
update the table by registering the application chosen by the user.

8. A main device (D1, 100) comprising:
a processor (110); an NFC interface (120) connected to the processor (110); a memory (160) connected to the processor (110) for storing a plurality of installed applications using the NFC interface (120);
an input device (150) connected to the processor (110); and an output device (140) connected to the processor (110); wherein the processor (110) is configured to run an operating system handling interactions with the NFC interface (120);
said main device (D1, 100) being **characterized in that** it comprises:
a router module operating between the NFC communication interface (120) and an application layer, and being configured to intercept any message received from the NFC interface (120), the NFC message including a message type and a service identification; said router module further comprising a table that manages the message type and the service identification to determine which application is handled by which message type;
said router further comprising means for:
in case the message type is already associated with a single application, selecting said single application, otherwise using the table to select the installed application matching the message type and the service identification of the NFC message, if such a matching exists in the table;
prompting a user of the main device (D1, 100) to accept a communication between a second device (D2) having a second NFC interface and the selected application; and
if the user accepts the communication, establishing the communication between the selected application and the second device (D2) via the NFC interface (120) by providing the NFC message to the selected application.

9. The main device of claim 8, wherein the router module further comprises means to:
prompt the user with an icon representing each application in case the table contains, for one message type, more than one application, and
update the table by registering the application chosen by the user.

## Patentansprüche

1. Verfahren zum Auswählen einer Anwendung auf einer ersten Vorrichtung (D1, 100), die eine NFC-Schnittstelle (120) aufweist und eine Vielzahl von installierten Anwendungen umfasst, die die NFC-Schnittstelle (120) nutzen, wobei das Verfahren die folgenden Schritte umfasst:
Erkennen einer zweiten Vorrichtung (D2), die eine zweite NFC-Schnittstelle aufweist, über die NFC-Schnittstelle (120) der ersten Vorrichtung (D1, 100);
Erhalten einer Nachricht, die einen Nachrichtentyp und eine Dienstkennung umfasst, von der zweiten Vorrichtung über die NFC-Schnittstelle (120);
Abfangen aller von der NFC-Schnittstelle (120) empfangenen Nachrichten durch ein Routermodul, das zwischen der NFC-Kommunikationsschnittstelle (120) und einer Anwendungsschicht der ersten Vorrichtung (D1, 100) arbeitet, wobei die Nachrichten durch eine Tabelle behandelt werden, die den Nachrichtentyp und die Dienstkennung verwaltet, um zu bestimmen, welche Anwendung durch welchen Nachrichtentyp behandelt wird; falls der Nachrichtentyp bereits einer einzigen Anwendung zugeordnet ist, Auswählen dieser einzigen Anwendung, andernfalls Auswählen der Anwendung aus der Vielzahl der installierten Anwendungen, die dem Nachrichtentyp und der Dienstkennung entsprechen, falls eine solche Übereinstimmung in der Tabelle existiert;
Auffordern eines Benutzers der ersten Vorrichtung (D1, 100), eine Kommunikation zwischen der zweiten Vorrichtung (D2) und der ausgewählten Anwendung zu akzeptieren; und
wenn der Benutzer die Kommunikation akzeptiert, Aufbauen der Kommunikation zwischen der ausgewählten Anwendung und der zweiten Vorrichtung (D2) über die NFC-Schnittstelle (120).

2. Verfahren nach Anspruch 1, wobei, wenn die Tabelle keine Dienstkennung für den empfangenen Nachrichtentyp enthält, während der Nachrichtentyp mehr als einer Anwendung in der Tabelle zugehörig ist, das Routermodul den Benutzer mit einem Symbol für jede Anwendung abfragt, die dem Nachrichtentyp entspricht, und die Tabelle durch Registrierung der vom Benutzer gewählten Anwendung aktualisiert.

3. Verfahren nach Anspruch 1 oder 2, wobei das Routermodul die Tabelle mit der Anwendung und dem Nachrichtentyp, der durch die Anwendung behandelt wird, aktualisiert, wenn eine Anwendung auf der ersten Vorrichtung (D1, 100) installiert ist.

4. Verfahren nach einem der Ansprüche 1 bis 3, wobei für den Fall, dass keine Anwendung mit dem Nachrichtentyp übereinstimmt, das Verfahren ferner die folgenden Schritte umfasst:
Senden, durch die erste Vorrichtung (D1, 100) einer Anfrage, die den Nachrichtentyp enthält, an einen Server;
Bestimmen, durch den Server, einer Liste von Anwendungen, die dem Nachrichtentyp entsprechen;
Senden der Liste an die erste Vorrichtung (D1, 100), Bestimmen, durch die erste Vorrichtung (D1, 100), ob eine installierte Anwendung in der Liste aufgeführt ist und,
wenn ja, Auffordern des Benutzers, eine Kommunikation zwischen der zweiten Vorrichtung (D2) und der installierten Anwendung zu akzeptieren.

5. Verfahren nach Anspruch 4, ferner umfassend den Schritt, dass, wenn keine der in der Liste aufgeführten Anwendungen installiert ist, dem Benutzer vorgeschlagen wird, eine der aufgeführten Anwendungen herunterzuladen und zu installieren.

6. Routermodul, das sich in einer ersten Vorrichtung (D1, 100) befindet, die eine NFC-Schnittstelle (120) aufweist und eine Vielzahl von installierten Anwendungen umfasst, die die NFC-Schnittstelle (120) nutzen, wobei das Routermodul zwischen der NFC-Kommunikationsschnittstelle (120) und einer Anwendungsschicht angeordnet ist und so konfiguriert ist, dass es jede von der NFC-Schnittstelle (120) empfangene Nachricht abfängt, wobei die Nachricht einen Nachrichtentyp und eine Dienstkennung umfasst, wobei das Routermodul ferner eine Tabelle umfasst, die den Nachrichtentyp und die Dienstkennung verwaltet, um zu bestimmen, welche Anwendung von welchem Nachrichtentyp behandelt wird;
wobei das Routermodul Mittel umfasst zum:
falls der Nachrichtentyp bereits einer einzigen Anwendung zugeordnet ist, Auswählen dieser einzigen Anwendung, andernfalls Auswählen der Anwendung aus der Vielzahl der installierten Anwendungen, die dem Nachrichtentyp und der Dienstkennung entsprechen, falls eine solche Übereinstimmung in der Tabelle existiert,
Auffordern eines Benutzers der ersten Vorrichtung (D1, 100), eine Kommunikation zwischen einer zweiten Vorrichtung (D2) mit einer zweiten NFC-Schnittstelle und der ausgewählten Anwendung zu akzeptieren, und
im Falle einer positiven Antwort, Aufbauen der Kommunikation zwischen der ausgewählten Anwendung und der zweiten Vorrichtung (D2) über die NFC-Schnittstelle (120).

7. Routermodul nach Anspruch 6, ferner umfassend Mittel zum:
Abfragen des Benutzers mit einem Symbol für jede Anwendung, wenn die Tabelle für einen Nachrichtentyp mehr als eine Anwendung enthält, und
Aktualisieren der Tabelle, indem die vom Benutzer gewählte Anwendung registriert wird.

8. Hauptvorrichtung (D1, 100) umfassend:
einen Prozessor (110); eine NFC-Schnittstelle (120), die mit dem Prozessor (110) verbunden ist; einen Speicher (160), der mit dem Prozessor (110) verbunden ist, um eine Vielzahl von installierten Anwendungen zu speichern, die die NFC-Schnittstelle (120) nutzen;
eine Eingabevorrichtung (150), die mit dem Prozessor (110) verbunden ist; und eine Ausgabevorrichtung (140), die mit dem Prozessor (110) verbunden ist; wobei der Prozessor (110) so konfiguriert ist, dass er ein Betriebssystem ausführt, das Interaktionen mit der NFC-Schnittstelle (120) behandelt;
wobei die Hauptvorrichtung (D1, 100) **dadurch gekennzeichnet ist, dass** sie Folgendes umfasst:
ein Routermodul, das zwischen der NFC-Kommunikationsschnittstelle (120) und einer Anwendungsschicht arbeitet und so konfiguriert ist, dass es jede von der NFC-Schnittstelle (120) empfangene Nachricht abfängt, wobei die NFC-Nachricht einen Nachrichtentyp und eine Dienstkennung umfasst, wobei das Routermodul ferner eine Tabelle umfasst, die den Nachrichtentyp und die Dienstkennung verwaltet, um zu bestimmen, welche Anwendung von welchem Nachrichtentyp behandelt wird;
wobei der Router Mittel umfasst zum:
falls der Nachrichtentyp bereits einer einzigen Anwendung zugeordnet ist, Auswählen dieser einzigen Anwendung, andernfalls Verwenden der Tabelle zum Auswählen der installierten Anwendung, die dem Nachrichtentyp und der Dienstkennung der NFC-Nachricht entspricht, falls eine solche Übereinstimmung in der Tabelle existiert,
Auffordern eines Benutzers der Hauptvorrichtung (D1, 100), eine Kommunikation zwischen einer zweiten Vorrichtung (D2) mit einer zweiten NFC-Schnittstelle und der ausgewählten Anwendung zu akzeptieren; und
wenn der Benutzer die Kommunikation akzeptiert, Aufbauen der Kommunikation zwischen der ausgewählten Anwendung und der zweiten Vorrichtung (D2) über die NFC-Schnittstelle (120) durch Bereitstellen der NFC-Nachricht an die ausgewählte Anwendung.

9. Hauptvorrichtung nach Anspruch 8, wobei das Routermodul ferner Mittel umfasst zum:
Abfragen des Benutzers mit einem Symbol für jede Anwendung, wenn die Tabelle für einen Nachrichtentyp mehr als eine Anwendung enthält, und
Aktualisieren der Tabelle, indem die vom Benutzer gewählte Anwendung registriert wird.

## Revendications

1. Procédé pour sélectionner une application sur un premier dispositif (D1, 100) ayant une interface NFC (120) et comprenant une pluralité d'applications installées en utilisant l'interface NFC (120), ledit procédé comprenant les étapes consistant à :
détecter, via l'interface NFC (120) du premier dispositif (D1, 100), un deuxième dispositif (D2) ayant une deuxième interface NFC ;
obtenir, à partir du deuxième dispositif via l'interface NFC (120), un message comprenant un type de message et une identification de service ;
intercepter, par un module routeur fonctionnant entre l'interface NFC (120) de communication et une couche d'application du premier dispositif (D1, 100), tous les messages reçus à partir de l'interface NFC (120), les messages étant traités par une table qui gère le type de message et l'identification de service pour déterminer quelle application est traitée par quel type de message ; dans le cas où le type de message est déjà associé à une application unique, sélectionner ladite application unique, sinon sélectionner l'application parmi la pluralité d'applications installées concordant avec le type de message et l'identification de service, si une telle concordance existe dans la table ;
inviter un utilisateur du premier dispositif (D1, 100) à accepter une communication entre le deuxième dispositif (D2) et l'application sélectionnée ; et
si l'utilisateur accepte la communication, établir la communication entre l'application sélectionnée et le deuxième dispositif (D2) via l'interface NFC (120).

2. Procédé de la revendication 1, dans lequel si la table ne contient pas une identification de service pour le type de message reçu alors que le type de message est associé à plus d'une application dans la table, le module routeur invite l'utilisateur avec une icône représentant chaque application concordant avec ledit type de message et met à jour la table en enregistrant l'application choisie par l'utilisateur.

3. Procédé de la revendication 1 ou 2, dans lequel, lorsqu'une application est installée dans le premier dispositif (D1, 100), le module routeur met à jour la table avec l'application et le type de message traité par l'application.

4. Procédé de l'une quelconque des revendications 1 à 3, dans lequel, dans le cas où aucune application ne concorde avec le type de message, le procédé comprend en outre les étapes consistant à :
envoyer, par le premier dispositif (D1, 100), à un serveur, une demande contenant le type de message ;
déterminer, par le serveur, une liste d'applications concordant avec le type de message ;
envoyer la liste au premier dispositif (D1, 100), déterminer, par le premier dispositif (D1, 100), si une application installée est répertoriée dans la liste et,
si c'est le cas, inviter l'utilisateur à accepter une communication entre le deuxième dispositif (D2) et l'application installée.

5. Procédé de la revendication 4, comprenant en outre l'étape consistant à, si aucune des applications répertoriées dans la liste n'est installée, proposer à l'utilisateur de télécharger et d'installer l'une des applications répertoriées.

6. Module routeur situé dans un premier dispositif (D1, 100) ayant une interface NFC (120) et comprenant une pluralité d'applications installées en utilisant l'interface NFC (120), ledit module routeur étant placé entre l'interface NFC (120) de communication et une couche d'application, et étant configuré pour intercepter tout message reçu à partir de l'interface NFC (120), ledit message comprenant un type de message et une identification de service, ledit module routeur comprenant en outre une table qui gère le type de message et l'identification de service pour déterminer quelle application est traitée par quel type de message ;
ledit module routeur comprenant des moyens pour :
dans le cas où le type de message est déjà associé à une application unique, sélectionner ladite application unique, sinon sélectionner l'application parmi la pluralité d'applications installées concordant avec le type de message et l'identification de service si une telle concordance existe dans la table,
inviter un utilisateur du premier dispositif (D1, 100) à accepter une communication entre un deuxième dispositif (D2) ayant une deuxième interface NFC et l'application sélectionnée, et
en cas de réponse positive, établir la communication entre l'application sélectionnée et le deuxième dispositif (D2) via l'interface NFC (120).

7. Module routeur de la revendication 6, comprenant en outre des moyens pour :
inviter l'utilisateur avec une icône représentant chaque application dans le cas où la table contient, pour un type de message, plus d'une application, et
mettre à jour la table en enregistrant l'application choisie par l'utilisateur.

8. Dispositif (D1, 100) principal comprenant :
un processeur (110) ;
une interface NFC (120) connectée au processeur (110) ;
une mémoire (160) connectée au processeur (110) pour stocker une pluralité d'applications installées en utilisant l'interface NFC (120) ;
un dispositif d'entrée (150) connecté au processeur (110) ; et
un dispositif de sortie (140) connecté au processeur (110) ;
dans lequel le processeur (110) est configuré pour exécuter un système d'exploitation traitant des interactions avec l'interface NFC (120) ;
ledit dispositif (D1, 100) principal étant **caractérisé en ce qu'**il comprend :
un module routeur fonctionnant entre l'interface NFC (120) de communication et une couche d'application, et étant configuré pour intercepter tout message reçu à partir de l'interface NFC (120), le message NFC comportant un type de message et une identification de service ; ledit module routeur comprenant en outre une table qui gère le type de message et l'identification de service pour déterminer quelle application est traitée par quel type de message ;
ledit routeur comprenant en outre des moyens pour :
dans le cas où le type de message est déjà associé à une application unique, sélectionner ladite application unique, sinon utiliser la table pour sélectionner l'application installée concordant avec le type de message et l'identification de service du message NFC, si une telle concordance existe dans la table ;
inviter un utilisateur du dispositif (D1, 100) principal à accepter une communication entre le deuxième dispositif (D2) ayant une deuxième interface NFC et l'application sélectionnée ; et
si l'utilisateur accepte la communication, établir la communication entre l'application sélectionnée et le deuxième dispositif (D2) via l'interface NFC (120) en fournissant le message NFC à l'application sélectionnée.

9. Dispositif principal de la revendication 8, dans lequel le module routeur comprend en outre des moyens pour :
inviter l'utilisateur avec une icône représentant chaque application dans le cas où la table contient, pour un type de message, plus d'une application, et
mettre à jour la table en enregistrant l'application choisie par l'utilisateur.
